# EUROPEAN PATENT APPLICATION

(11) **EP 4 501 493 A1**
(43) Date of publication of application: **05.02.2025**
(21) Application number: 23774593.0
(22) Date of filing: 10.03.2023
(51) Int. Cl.: B22F 1/00, B22F 1/052, B22F 10/14, B22F 10/34, B33Y 10/00, B33Y 70/00, C22C 1/04, C22C 21/00, C22C 21/02

(54) **ALUMINUM POWDER PRODUCT FOR METAL ADDITIVE MANUFACTURING AND METHOD FOR MANUFACTURING ALUMINUM POWDER MOLDED OBJECT**

(30) Priority: 24.03.2022 JP 2022048834
(71) Applicant: Mitsubishi Materials Corporation, Tokyo 100-8117 (JP)
(72) Inventor: KATO Jun, Saitama-shi, Saitama 330-8508 (JP); OHMORI Shinichi, Saitama-shi, Saitama 330-8508 (JP); KOBAYASHI Keigo, Saitama-shi, Saitama 330-8508 (JP)
(74) Representative: Hoffmann Eitle
(86) International application number: PCT/JP2023/009306
(87) International publication number: WO 2023/181994

(57) **Abstract**

In an aluminum powder product for metal additive manufacturing, a purity of aluminum in the entire powder is 98 mass% or more, 0.01 mass% or more and 0.5 mass% or less of Mg is contained, and a ratio Mg amount/oxygen amount of a contained amount of Mg (mass%) to a contained amount of oxygen (mass%) is 0.1 or more and 2.0 or less.

## Description

### TECHNICAL FIELD

The present invention relates to an aluminum powder product for metal additive manufacturing and a method for manufacturing an aluminum powder additive manufactured body.

Priority is claimed on Japanese Patent Application No. 2022-048834, filed March 24, 2022, the content of which is incorporated herein by reference.

### BACKGROUND ART

Aluminum has been widely used as a material for a heat sink due to its characteristics such as light weight and high thermal conductivity. However, in order to further improve heat dissipation characteristics, there is a need to design and produce complex-shaped pins and fins, lattice shapes, and the like enabling more efficient heat exchange. As a method for manufacturing a complex-shaped product, using metal 3D printers is increasing.

In recent years, a binder jet method has been attracting attention as one of additive manufacturing technologies using metal powders. In the binder jet method, a binder containing a thermosetting resin, a thermoplastic resin, or a photocurable resin is selectively sprayed from a print head onto a metal powder layer and repeatedly stacked the metal powder layers. The binder jet method is known as a method in which a metal powder green body fixed to a desired three-dimensional shape is obtained due to the repeated stacking, and then subjected to binder fixing, removal of unnecessary powder, degreasing, and sintering to obtain a three-dimensional metal additive manufactured body.

For example, Patent Documents 1 and 2 shown below disclose metal additive manufacturing using a binder jet method, or a molding device therefor.

### CITATION LIST

### Patent Documents

[Patent Document 1]
   Published Japanese Translation No. 2020-511593 of the PCT International Publication
[Patent Document 2]
   Japanese Unexamined Patent Application, First Publication No. 2020-152001
[Patent Document 3]
   Japanese Unexamined Patent Application, First Publication No. 2004-308004

### SUMMARY OF INVENTION

### Technical Problem

Meanwhile, when a additive manufactured body formed of aluminum or an aluminum alloy is obtained using the binder jet method, it is necessary to reduce the sintering resistance due to an oxide layer on the surface of the aluminum powder particles.

For example, Patent Document 3 describes a method for enhancing sinterability of aluminum by using a fine powder having a large specific surface area, but when the powder is applied to the binder jet method, it is considered that aluminum having a small specific gravity scatters during formation of powder layers, and thus causes a decrease in uniformity or packing density, or poses safety problems.

Therefore, when a additive manufactured body formed of aluminum or an aluminum alloy is manufactured using the binder jet method, it is important to secure sufficient sinterability while ensuring fluidity of the metal powder.

The present invention has been made in view of the above-described problems, and an object thereof is to provide an aluminum powder product for metal additive manufacturing that can be applied to a binder jet method even if it is an aluminum powder that has an oxide layer and is known as a sintering-resistant material, and a method for manufacturing an aluminum powder additive manufactured body using the aluminum powder product for metal additive manufacturing.

### Solution to Problem

Based on the above background, the present inventors conducted studies regarding binder jet method using and applying an aluminum powder as a raw material, in which a ratio of a magnesium amount (mass%) to an oxygen amount (mass%) in the raw material is adjusted to 0.1 or more and 2.0 or less and the amount of oxygen contained in the aluminum powder is 0.3 mass% or less.

As a result, they found and developed a technology for manufacturing an aluminum sintered body having a high relative density of 90% or more relative to a true density of the aluminum powder as the raw material, by performing a degreasing step at 500°C or lower in an oxidizing atmosphere after forming by the binder jet method, or sintering an obtained formed degreased body by heating in a non-oxidizing gas flow under reduced pressure of 1 Pa or more and 100 kPa or less.

As a result of various studies, the present inventors provide an aluminum powder product for metal additive manufacturing and a method for manufacturing an aluminum powder additive manufactured body using the aluminum powder product for metal additive manufacturing.

(Aspect 1) An aluminum powder product for metal additive manufacturing according to Aspect 1 of the present invention is characterized in that, a purity of aluminum in the entire powder product is 98 mass% or more, and the aluminum powder product contains 0.01 mass% or more and 0.5 mass% or less of Mg, and a ratio Mg amount/oxygen amount that is a contained amount of Mg (mass%) to a contained amount of oxygen (mass%) is 0.1 or more and 2.0 or less.

The above-described aluminum powder product for metal additive manufacturing contains an appropriate amount of Mg and an appropriate amount of oxygen corresponding to the contained Mg. When the aluminum powder contains an appropriate amount of Mg, Mg reduces and partially destroys the oxide layer on surfaces of particles of the aluminum powder product for metal additive manufacturing, thereby enhancing sinterability. In addition, a certain amount or more of Mg is required relative to the oxygen amount to accomplish the reduction reaction of the surfaces of the particles of the aluminum powder product for metal additive manufacturing. If the Mg amount is too small, it is not possible to achieve the partial destruction of the oxide layer on the surfaces of the particles of the aluminum powder product for metal additive manufacturing. If the Mg amount is too large, the sinterability enhancement effect due to the destruction of the oxide layer is saturated, and an increase in Mg amount causes decreases in conductivity and thermal conductivity, and the like. The Mg amount may be preferably 0.015 mass% or more and 0.4 mass% or less, and more preferably 0.02 mass% or more and 0.3 mass% or less. The same may also apply to Aspects 2 to 10 to be described later.

The value of Mg amount/oxygen amount is required to be 0.1 or more and 2.0 or less to accomplish the reduction reaction of the surface of the aluminum powder product for metal additive manufacturing, enhance the sinterability, and prevent the thermal conductivity from decreasing. The value of Mg amount/oxygen amount may be more preferably 0.015 or more and 0.15 or less, and still more preferably 0.02 or more and 0.1 or less. The same may also apply to Aspects 2 to 10 to be described later.

(Aspect 2) In the aluminum powder product for metal additive manufacturing according to Aspect 2, 0.1 mass% or more and 1.0 mass% or less of Si is preferably contained in addition to the Mg in Aspect 1.

When the Si content is in the above-described range, it contributes to a decrease in melting point of the aluminum powder product for metal additive manufacturing and the sinterability can be enhanced. Moreover, high thermal conductivity can be maintained while suppressing a decrease in conductivity. The Si content may be 0.15 mass% or more and 0.8 mass% or less, and preferably 0.2 mass% or more and 0.7 mass% or less. The same may also apply to Aspects 3 to 10 to be described later.

(Aspect 3) The aluminum powder product for metal additive manufacturing according to Aspect 3 is characterized in that it is a mixture of an aluminum powder having a purity of 99% or more and an aluminum alloy powder containing 0.1 mass% or more and 1.0 mass% or less of Mg and 3.0 mass% or more and 12.0 mass% or less of Si, in which a ratio Mg amount/oxygen amount of a contained amount of Mg (mass%) to a contained amount of oxygen (mass%) is 0.1 or more and 2.0 or less.

The above-described aluminum powder product for metal additive manufacturing may contain an appropriate amount of Mg relative to the entirety of the mixture and has an appropriate amount of oxygen corresponding to the contained Mg. When the powder mixture contains an appropriate amount of Mg, Mg reduces and partially destroys the oxide layer on surfaces of particles of the aluminum powder having a purity of 99% or more, thereby enhancing sinterability. In addition, a certain amount or more of Mg is required relative to the oxygen amount to accomplish the reduction reaction of the surfaces of the particles of the aluminum powder or the surfaces of the particles of the aluminum alloy powder. If the Mg amount is too small, it is not possible to achieve the partial destruction of the oxide layer on the surfaces of the particles of the aluminum powder or the particles of the aluminum alloy powder. When the Mg amount is too large, the sinterability enhancement effect due to the destruction of the oxide layer is saturated, and an increase in Mg amount causes a decrease in conductivity and thermal conductivity, and the like.

In the aluminum powder product for metal additive manufacturing according to Aspect 3, Mg amount/oxygen amount is required to be 0.1 or more and 2.0 or less to accomplish the reduction reaction of the surface of the aluminum powder or the aluminum alloy powder, enhance the sinterability, and prevent the thermal conductivity from decreasing.

(Aspect 4) In the aluminum powder product for metal additive manufacturing according to Aspect 4, the oxygen amount is preferably 0.05 mass% or more and 0.3 mass% or less in Aspects 1 to 3.

The range of the Mg amount is defined, and the range of the oxygen amount is set based on the substantial ratio of Mg amount/oxygen amount. Particularly, however, the upper limit is defined as a value that can be taken in consideration of a method for manufacturing a powder for additive manufacturing. The oxygen amount may be 0.05 mass% or more and 0.3 mass% or less. The same may also apply to Aspects 5 to 10 to be described later.

(Aspect 5) In the aluminum powder product for metal additive manufacturing according to Aspect 5, a volume median diameter measured by a laser diffraction/scattering method is preferably 10 µm or more and 100 µm or less in Aspects 1 to 4.

When the volume median diameter is 10 µm or more and 100 µm or less, it is possible to provide an aluminum powder having a particle diameter favorable for the stacking of the aluminum powder and a particle diameter suitable for a binder jet method. The volume median diameter may be 10 µm or more and 50 µm or less. The same may also apply to Aspects 6 to 10 to be described later.

(Aspect 6) A method for manufacturing an aluminum powder additive manufactured body according to Aspect 6, including: alternately repeating a step of stacking an aluminum powder and a step of applying an ink containing a binder for selectively fixing the stacked aluminum powder; curing a resin in the binder by heating to form an aluminum powder green body; degreasing the aluminum powder green body by heating to prepare an aluminum powder formed degreased body that is a sintering precursor; and performing a step of sintering the aluminum powder formed degreased body by heating to obtain an aluminum additive manufactured body. As the aluminum powder, an aluminum powder product for metal additive manufacturing in which a purity of aluminum in the entire powder is 98 mass% or more, 0.01 mass% or more and 0.5 mass% or less of Mg is contained, and a ratio Mg amount/oxygen amount of a contained amount of Mg (mass%) to a contained amount of oxygen (mass%) is 0.1 or more and 2.0 or less is used. The degreasing step is preferably performed at 500°C or lower in any one of an oxidizing atmosphere, an inert atmosphere, or a reduced-pressure atmosphere of 1 Pa or more and 100 kPa or less.

When the aluminum powder in which 0.01 mass% or more and 0.5 mass% or less of Mg is contained and the value of Mg amount/oxygen amount is 0.1 or more and 2.0 or less is degreased, the aluminum powder can be sintered by heating while preventing Mg from oxidizing due to the conditions for the degreasing step described above. That is, it is possible to prevent Mg from oxidizing in the degreasing step and maintain a state in which Mg has no oxide layer until sintering by heating. Therefore, by making the aluminum coating destruction effect of Mg work effectively, a sinterability enhancement effect can be obtained. The aluminum powder additive manufactured body may be a heat sink having fins.

(Aspect 7) In the method for manufacturing an aluminum powder additive manufactured body according to Aspect 7, an aluminum powder raw material containing 0.1 mass% or more and 1.0 mass% or less of Si in addition to the Mg can be used in Aspect 6.

When the aluminum powder raw material containing Si is used, the melting point of an aluminum alloy can be lowered with the addition of Si, which contributes to the enhancement of sinterability.

(Aspect 8) A method for manufacturing an aluminum powder additive manufactured body according to Aspect 8, including: repeating a step of stacking an aluminum powder and a step of applying an ink containing a binder for selectively fixing the stacked aluminum powder; curing a resin by heating to form an aluminum powder green body; degreasing the aluminum powder green body by heating to prepare an aluminum powder formed degreased body that is a sintering precursor; and performing a step of sintering the aluminum powder formed degreased body by heating to obtain an aluminum additive manufactured body. As the aluminum powder, an aluminum powder product for metal additive manufacturing that is a mixture of an aluminum powder having a purity of 99% or more and an aluminum alloy powder containing 0.1 mass% or more and 1.0 mass% or less of Mg and 3.0 mass% or more and 12.0 mass% or less of Si, in which a ratio Mg amount/oxygen amount of a contained amount of Mg (mass%) to a contained amount of oxygen (mass%) is 0.1 or more and 2.0 or less, is used, and sintering by heating is performed after the degreasing step is performed at 500°C or lower in any one of an oxidizing atmosphere, an inert atmosphere, or a reduced-pressure atmosphere of 1 Pa or more and 100 kPa or less to prevent Mg from oxidizing.

Because Mg is prevented from oxidizing in the degreasing step, a state in which Mg has no oxide layer can be maintained until sintering by heating. Therefore, by making the aluminum coating destruction effect of Mg work effectively, a sinterability enhancement effect can be obtained.

When the aluminum alloy powder is mixed with the aluminum powder having a purity of 99% or more, 3.0 mass% or more and 12.0 mass% or less of Si may be contained in addition to 0.1 mass% or more and 1.0 mass% or less of Mg. When the Si content is in the above-described range, it contributes to a decrease in melting point of the aluminum alloy powder and the sinterability can be enhanced. Moreover, it is possible to manufacture an aluminum additive manufactured body in which high thermal conductivity are maintained without a significant decrease in conductivity.

(Aspect 9) In the method for manufacturing an aluminum powder additive manufactured body according to Aspect 9, the step of performing sintering by heating can be performed in any one of an inert atmosphere gas flow, a reducing gas flow, an inert gas flow in a reduced-pressure atmosphere of 1 Pa or more and 100 kPa or less, or a reducing gas flow in a reduced-pressure atmosphere of 1 Pa or more and 100 kPa or less in Aspects 6 to 8.

When sintering by heating is performed in any one of an inert atmosphere gas flow, a reducing gas flow, an inert gas flow in a reduced-pressure atmosphere of 1 Pa or more and 100 kPa or less, or a reducing gas flow in a reduced-pressure atmosphere of 1 Pa or more and 100 kPa or less, the added Mg can be efficiently reacted with the oxide layer of the aluminum to accelerate the generation of spinel, which can contribute to the enhancement of sinterability. In addition, when sintering by heating is performed in the above-described gas flow, a sufficient amount of the gas flow can be obtained, and the binder residue can be efficiently removed.

(Aspect 10) In the method for manufacturing an aluminum powder additive manufactured body according to Aspect 10, the oxidizing atmosphere in the degreasing step can be set to be dry air having a dew point of 10°C or lower in Aspects 6 to 9.

With the use of the dry air having a dew point of 10°C or lower, the reaction between the moisture in the air and the aluminum can be suppressed, and thus a binder component that is likely to be included in the aluminum powder green body can be efficiently removed. The oxidizing atmosphere in the degreasing step may be more preferably dry air having a dew point of -80°C or higher and 0°C or lower.

The aluminum powder additive manufactured body obtained by the method for manufacturing an aluminum powder additive manufactured body may have a relative density of 90% or more and a thermal conductivity of 180 W/K.

### ADVANTAGEOUS EFFECTS OF INVENTION

With an aluminum powder product for metal additive manufacturing according to each aspect of the present invention, it is possible to manufacture an aluminum member having few internal defects and a high relative density by a binder jet method.

As a result, it is possible to obtain a high density, high electrical conductivity, and high thermal conductivity for an aluminum sintered body to be obtained. Therefore, for example, it is possible to further improve the performance of heat exchange members, conductive members, and strength members prepared by using the binder jet method.

### BRIEF DESCRIPTION OF DRAWINGS

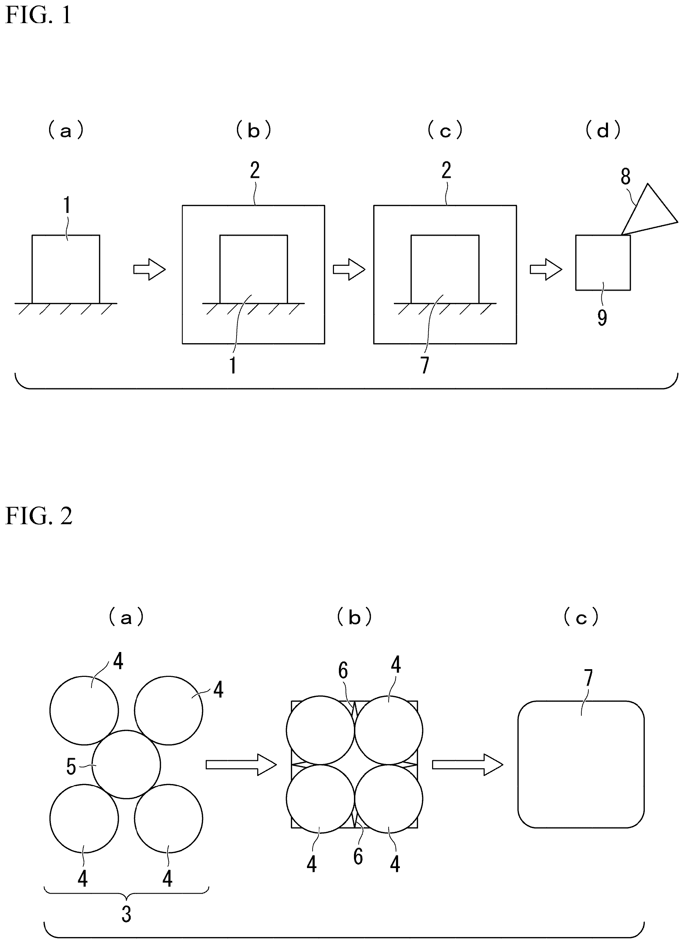

FIG. 1 shows an example of an aluminum powder product for metal additive manufacturing and a sintering process thereof according to a first embodiment, (a) is a partially enlarged cross-sectional view showing a stacked body of an aluminum powder, (b) is an explanatory diagram showing a state in which the same stacked body is sintered in a heating furnace, (c) is an explanatory diagram showing an overview of an obtained sintered body, and (d) is an explanatory diagram showing a state in which the sintered body is subjected to final processing.
FIG. 2 shows an example of the process of sintering the aluminum powder product for metal additive manufacturing, (a) is an explanatory diagram showing the aluminum powder product for metal additive manufacturing before sintering, (b) is an explanatory diagram showing a state in which a liquid phase wet-spreads in the middle of the sintering, and (c) is an explanatory diagram showing a state in which powder particles are integrated and form a sintered body after the sintering.

### DESCRIPTION OF EMBODIMENTS

Hereinafter, the present invention will be described in detail, but is not limited to embodiments to be described below.

For example, an aluminum powder product for metal additive manufacturing according to the present embodiment is an aluminum-based powder having a purity of 98% or more, and the powder contains 0.01 mass% or more and 0.5 mass% or less of Mg with a ratio Mg amount/oxygen amount of a contained amount of Mg (mass%) to a contained amount of oxygen (mass%) ranging from 0.1 or more and 2.0 or less.

In addition, the aluminum powder product for metal additive manufacturing according to the present embodiment may be a powder mixture of an aluminum powder having a purity of 99% or more and an aluminum alloy powder containing 0.1 mass% or more and 1.0 mass% or less of Mg and 3.0 mass% or more and 12.0 mass% or less of Si.

When the aluminum powder product for metal additive manufacturing is a powder mixture of an aluminum powder having a purity of 99% or more and an aluminum alloy powder containing 0.1 mass% or more and 1.0 mass% or less of Mg, it is preferable to adjust the amount of the aluminum alloy powder so that the ratio of Mg to the total mass of the powder is 0.01 mass% or more and 0.5 mass% or less, and then uniformly mix the aluminum alloy powder with the aluminum powder having a purity of 99% or more.

The aluminum powder product for metal additive manufacturing contains Mg as described above, and contains Si in the above-described range as necessary, and its remainder consists of unavoidable impurities and aluminum.

### [Mg: 0.01 to 0.5 mass%]

When the aluminum powder product for metal additive manufacturing contains Mg in the above-described range, Mg reduces and partially destroys the oxide layer on an aluminum powder surface, thereby enhancing the sinterability of the entire aluminum powder.

In addition, a certain amount or more of Mg is required relative to the oxygen amount to accomplish the reduction reaction of the aluminum powder surface. If the Mg amount is too small, it is not possible to achieve the partial destruction of the oxide layer of the aluminum powder. If the Mg amount is too large, the sinterability enhancement effect due to the destruction of the oxide layer is saturated, and an increase in Mg amount causes a decrease in conductivity, a decrease in thermal conductivity, and the like.

In order to accomplish the reduction reaction of the aluminum powder surface, enhance the sinterability, and prevent the thermal conductivity from decreasing, it is important that the ratio Mg amount/oxygen amount of the Mg amount (mass%) to the oxygen amount (mass%) in the aluminum powder is adjusted to 0.1 or more and 2.0 or less.

When Mg is added to aluminum as an alloying component, the amount of Mg added is in a ratio of 0.1 or more and 2.0 or less relative to the amount of oxygen, so that Mg can generate spinel (MgAl₂O₄) by reacting with the oxide layer on the aluminum powder surface and partially destroy the oxide layer, and high sinterability can be obtained.

If the value of Mg amount/oxygen amount is less than 0.1, Mg is not sufficiently present relative to the oxide layer of the aluminum, and thus the oxide layer destruction effect occurring due to the generation of the spinel cannot be sufficiently obtained. If the value of Mg amount/oxygen amount is more than 2.0, too much Mg is present for the oxide layer destruction effect, Mg excessively evaporates during sintering by heating under reduced pressure, which causes pores to be generated in an aluminum additive manufactured body, and thus a reached density of the aluminum additive manufactured body may decrease.

In addition, in the aluminum powder product for metal additive manufacturing, the oxygen content is preferably 0.3 mass% or less. If the oxygen content is more than 0.3 mass%, the thickness of the oxide layer excessively increases, and thus it may be difficult to partially destroy the oxide layer by adding Mg. It is desirable that the oxygen content in the aluminum powder product for metal additive manufacturing be small. However, since the manufacturing conditions must be strictly controlled to set the oxygen content to be less than 0.05 mass%, the oxygen content is preferably 0.05 mass% or more.

### [Si: 0.1 to 1.0 mass%]

The aluminum powder product for metal additive manufacturing may contain, in addition to Mg in the above-described range, 0.1 mass% or more and 1.0 mass% or less of Si as an alloy component. When the Si content is in the above-described range, it contributes to a decrease in melting point of the aluminum alloy powder and the sinterability can be enhanced. Moreover, high thermal conductivity can be maintained without a significant decrease in electrical conductivity.

### [Mg of Aluminum Alloy Powder: 0.1 to 1.0 mass%, Si: 3.0 to 12.0 mass%]

In the aluminum powder for additive manufacturing according to the present embodiment, a powder mixture of an aluminum powder having a purity of 99% or more and an aluminum alloy powder containing 0.1 mass% or more and 1.0 mass% or less of Mg and 3.0 mass% or more and 12.0 mass% or less of Si may be adopted.

### [Volume median diameter (D50) of 10 µm or More and 100 µm or Less]

In the above-described aluminum powder, or the pure aluminum powder and aluminum alloy powder constituting the powder mixture, a volume median diameter is preferably 10 µm or more and 100 µm or less.

When the volume median diameter is 10 µm or more and 100 µm or less, it is possible to obtain a stabilized powder mixture having excellent fluidity and sinterability. If the volume median diameter (D50) is less than 10 µm, there is a risk of dust explosion due to a decrease in fluidity or scattering of the powder. If the volume median diameter (D50) is more than 100 µm, the specific surface areas of the powder particles are reduced. Therefore, the sinterability of the aluminum powder mixture decreases, and a sufficient reached density may not be obtained for a sintered body.

### [Method of Manufacturing Aluminum Powder Sintered Body]

In order to produce an aluminum powder sintered body using the above-described aluminum powder for additive manufacturing, a method can be used in which, first, the above-described aluminum powder is stacked as a raw material powder (aluminum powder product for metal additive manufacturing), selective spraying a binder containing a thermosetting resin, a thermoplastic resin, or a photocurable resin onto the stacked raw material powder, and these steps are repeatedly performed to form a shape close to a target shape, a degreasing treatment is performed, and then sintering by heating is performed.

For example, the aluminum powder having a high purity for constituting the aluminum powder product for metal additive manufacturing can be manufactured by a method such as a nitrogen gas atomization method. The aluminum alloy powder for constituting the aluminum powder mixture can be manufactured from a molten alloy having a target composition by a nitrogen gas atomization method, for example.

For example, to a necessary amount of pure aluminum according to a target composition, a necessary amount of an aluminum mother alloy is added and put into a melting furnace to produce a molten aluminum alloy, and the above-described aluminum alloy powder can be prepared from the molten metal by an inert gas atomization method.

The obtained aluminum powder or aluminum alloy powder is subjected to sieving or washing to remove a coarse powder and a fine powder consisting of fumes, and then sieved as necessary according to the target particle size.

When the above-described aluminum powder product is formed to obtain a target shape, a powder green body having a shape similar to a target product shape can be obtained by repeatedly performing stacking the raw material powder and spraying a selectively binder-containing ink. Due to the repeated stacking, the raw material powder is fixed to have a shape that matches a desired three-dimensional shape. After the raw material powder of the portion where the binder ink has been applied is fixed by heating, removal of unnecessary powder, a degreasing step, and the like are performed as necessary, and for example, a cube-shaped green body 1 shown in (a) of FIG. 1 can be obtained. The following degreasing step is performed on the green body 1.

### [Degreasing Step]

The degreasing step is preferably performed at 500°C or lower in an oxidizing atmosphere. In addition, the degreasing step is more preferably performed with dry air having a dew point of 10°C or lower at 500°C or lower in an oxidizing atmosphere (in the air or the like). When degreasing is performed with dry air having a dew point of 10°C or lower, it is possible to efficiently remove the binder contained in the aluminum powder green body while suppressing the reaction between the moisture in the air and the aluminum.

In the degreasing step, degreasing is desirably performed under an oxidizing atmosphere containing oxygen to efficiently remove the binder contained in the ink. Meanwhile, Mg is desirably present as an alloy component or a simple substance in the aluminum powder formed degreased body that is in a state of a sintering precursor to maximize the above-described oxide layer destruction effect of Mg. It is not preferable that Mg be present as an oxide at the stage of the aluminum powder formed degreased body. Therefore, it is more desirable that the degreasing step be performed at 400°C or lower to suppress the oxidation of Mg.

### [Heating and Sintering Step]

Once the green body 1 is obtained, the green body 1 is housed in a heating furnace 2 as shown in (b) of FIG. 1, and sintered by being heated to a temperature of about 560°C to 650°C for a necessary time in a reducing atmosphere or an inert gas atmosphere as a reduced-pressure atmosphere.

By heating to a temperature in the above range, a liquid phase is generated at an interface between the particles of the raw material powder and wet-spreads to fill the gaps between the particles of the raw material powder, so that isotropic shrinkage can be obtained and the density can be increased. In that case, regarding the rate of temperature increase, it is desirable that, in order to suppress the rapid generation of the liquid phase, heating be performed at a rate of temperature increase of 10 °C/min or less in a temperature range of 500°C or higher at which the generation of the liquid phase starts.

In addition, in order to further stabilize the wet-spreading of the liquid phase between the powder particles, a heating step may be performed in two or more stages with the body of accelerating solid phase sintering by keeping the temperature at or below the temperature at which the liquid phase is generated and of stabilizing the gaps between the particles.

When the heating and sintering step is performed under a reduced-pressure atmosphere of 1 Pa or more and 100 kPa or less, the added Mg efficiently reacts with the oxide layer on the aluminum powder surface, and thus the above-described spinel forming reaction can be accelerated. In addition, with a flow of an inert gas or a reducing gas, the binder residue remaining in the degreased body can be efficiently removed.

In a reduced-pressure atmosphere of less than 1 Pa, it is not possible to obtain a sufficient gas flow rate for maintaining a high degree of vacuum, and the sinterability may decrease due to the influence of the binder residue. Under higher pressure than 100 kPa, the pressure reduction is not sufficient. Therefore, the added Mg does not sufficiently evaporate, the reaction with the oxide layer on the aluminum surface is not sufficient, and the sinterability enhancement effect due to the addition of Mg cannot be obtained.

In addition, with an inert gas flow or a reducing gas flow as a gas flow, the oxidation of the aluminum surface during sintering by heating can be suppressed.

FIG. 2 shows an example in which an aluminum powder mixture 3 is additively manufactured, and shows an aluminum powder mixture obtained by mixing aluminum powder particles 4 having a purity of 99% or more and aluminum alloy powder particles 5 having a lower melting point than the aluminum powder particles 4. In FIG. 2, an aluminum powder mixture including four aluminum powder particles 4 and one aluminum alloy powder particle 5 is shown for the sake of modeling, but the number of the aluminum powder particles 4 and the number of the aluminum alloy powder particles 5 may be in any ratio as long as the above-described proportion by mass% is achieved.

FIG. 2 is an explanatory diagram for showing a case where the aluminum powder mixture 3 is heated to a temperature of about 560°C to 650°C by modeling.

Pure aluminum has a melting point of about 660°C. In addition, when eutectic alloy elements such as Mg and Si are added to pure aluminum, an aluminum alloy powder having a melting point lower than the melting point of the pure aluminum of about 660°C is obtained.

(a) of FIG. 2 shows a model configuration when the pure aluminum powder particles 4 and the aluminum alloy powder particles 5 are blended at a ratio of 4:1 to constitute the aluminum powder mixture 3, for the sake of illustration simplification.

Also, all the pure aluminum powder particles 4 shown in (a) of FIG. 2 may be omitted and the aluminum powder mixture 3 may be formed of the aluminum alloy powder particles 5.

When the aluminum powder mixture 3 shown in (a) of FIG. 2 is heated to the above-described temperature, a liquid phase 6 is generated from the aluminum alloy powder particle 5 having a low melting point, and as shown in (b) of FIG. 2, the liquid phase 6 wet-spreads to the gaps between the pure aluminum powder particles 4 that are present therearound.

Since the pure aluminum powder particles 4 has a melting point of about 660°C, all the pure aluminum powder particles 4 do not completely melt by heating in the above-described temperature range, but parts where the liquid phase 6 has wet-spread, which are parts at the interfaces between the pure aluminum powder particles 4, partially melt and fuse with each other. Thus, when cooling is performed after heating for a predetermined time, it is possible to finally obtain a dense sintered body 7 that is almost entirely melted and integrated, as shown in (c) of FIG. 2. (c) of FIG. 1 shows a state in which the sintered body 7 is generated in the heating furnace 2.

The obtained sintered body 7 can be finished by being processed or surface-polished with a cutting tool 8 as needed as shown in (d) of FIG. 1, to obtain a sintered product (aluminum powder additive manufactured body) 9.

Regarding the sintered body 7 or the sintered product 9, since the oxygen content in the aluminum powder is 0.3 mass% or less, Mg is contained in a range of 0.01 to 0.5 mass%, and the ratio Mg amount/oxygen amount is in a range of 0.1 to 2.0, sintering can be carried out while the oxide layer on the aluminum powder surface can be efficiently destroyed during sintering. Accordingly, the sintered body 7 or the sintered product 9 has a dense structure in which the liquid phase effectively fills the gaps between the pure aluminum powder particles 4.

Therefore, it is possible to obtain a sintered body 7 or a sintered product 9 having a high density and a shape that is close to a target shape and well-regulated. For example, it is possible to obtain a sintered body 7 or a sintered product 9 made of aluminum with a relative density of 80% or more and a thermal conductivity of 180 W/mK or more.

With the sintered body 7 or the sintered product 9 described above, it is possible to realize a high density and obtain high thermal conductivity.

Due to the reasons, for example, it is possible to further improve the performance of heat exchange members, conductive members, and strength members prepared by using the sintered body 7 or the sintered product 9 described above.

In addition, the sintered body 7 or the sintered product 9 made of aluminum may be subjected to a surface treatment such as polishing, anodization, or plating according to the purpose.

Since the sintered body 7 or the sintered product 9 described above has a high density and high thermal conductivity, it is desirable as a constituent member of a heat exchanger. Since the sintered body 7 or the sintered product 9 is dense and has high thermal conductivity, it contributes to an improvement of the performance of a heat exchanger constituted using the sintered body 7 or the sintered product 9.

### EXAMPLES

A necessary amount of an aluminum mother alloy according to a target composition was added and put into a melting furnace to produce a molten aluminum alloy, and from the molten metal, aluminum alloy powders (Examples 1 to 6 and Comparative Examples 1 and 2) having compositions shown in Table 1 were prepared by an inert gas atomization method.

In addition, a necessary amount of pure aluminum or an aluminum mother alloy according to a target composition was prepared and put into a plurality of melting furnaces to produce molten pure aluminum or molten aluminum alloys, and from the molten metals in the melting furnaces, a pure aluminum powder (powder 1) and an aluminum alloy powder (powder 2) having compositions shown in Table 2 were prepared by an inert gas atomization method.

The obtained pure aluminum powder and aluminum alloy powder were subjected to sieving or washing to remove a coarse powder and a fine powder consisting of fumes, and then sieved as necessary according to the target particle size. Then, the pure aluminum powder (powder 1) and the aluminum alloy powder (powder 2) were mixed to obtain a mixing ratio shown in Table 2 below, and thus an aluminum powder mixture was obtained.

Using the aluminum powder having the composition shown in Tables 1 and 2, a shape having a length of 10 mm × a width of 10 mm × a thickness of 5 mm was formed with the use of a metal binder jet type additive manufacturing device (manufactured by Digital Metal, trade name: DM-P2500), and then heated at 250°C under an air atmosphere or an inert gas atmosphere to cure the resin. Thereafter, the obtained degreased body was degreased by heating at 400°C under a dry air atmosphere with a dew point of 10°C or lower or a humidified air atmosphere achieved by bubbling in a water tank. The resulting body was further heated to 565°C to 650°C to prepare a sintered body.

Measurement methods for each physical property value are shown below.

### [Measurement of Particle Size Distribution]

In the particle size distribution measurement for the pure aluminum powder and the aluminum alloy powder, trade name: MT3300EX II (laser diffraction/scattering type particle diameter distribution measurement device), manufactured by Microtrac, was used to measure the particle diameter distribution in a wet manner, and a volume median diameter D50 was calculated from the obtained result.

### [Density of Additive manufactured body]

The bulk density of the obtained additive manufactured body was measured according to JIS Z 8807 Methods of measuring density and specific gravity of solid, and the true density of the additive manufactured body was measured by a pycnometer method. From the obtained bulk density and true density, the relative density (= bulk density/true density) of the additive manufactured body was calculated.

### [Aluminum Purity and Alloy Element Mass Ratio]

Using an inductively coupled plasma emission spectrometer, a mass ratio of Mg and Si contained in the aluminum powder, the aluminum alloy powder, and the aluminum powder mixture was measured. At the same time, a mass ratio of 15 elements of Fe, Cu, Mn, Zn, Ti, Cr, Zr, B, Ni, Bi, Pb, Ga, V, Sn, and Be was measured, and a value obtained by subtracting the total amount of 17 elements including Mg and Si from 100% was measured as an aluminum purity.

### [Oxygen Concentration]

The oxygen concentration in the aluminum powder mixture was measured by using an inert gas fusion-infrared absorption method.

### [Thermal Conductivity]

Regarding the thermal conductivity of the sintered body, the prepared sintered body was processed into 8 mm × 8 mm × 2 mm and the thermal conductivity thereof was measured by a laser flash method using trade name: LFA467 manufactured by NETZSCH. The measurement results are collectively shown in Tables 1 to 3 below.

**[Table 1]**

| | Composition of Aluminum Powder | | | | | D50 | Conditions for Resin Curing Step | Conditions for Degreasing Step | Conditions for Sintering Step | Relative Density of Sintered Body | Thermal Conductivity |
|---|---|---|---|---|---|---|---|---|---|---|---|
| | Mg/% | O/% | Si/% | Mg/O | Al | | | | | | W/mK |
| Example 1 | 0.02 | 0.09 | 0.15 | 0.222 | 99.73 | 24 | 200°C-Dry Air | 400°C-Dry Air | 620°C-Ar under Reduced Pressure of 1 kPa | 0.949 | 225 |
| Example 2 | 0.05 | 0.12 | 0.14 | 0.375 | 99.72 | 33 | 200°C-Dry Air | 400°C-Dry Air | 620°C-Ar under Reduced Pressure of 10 Pa | 0.924 | 216 |
| Example 3 | 0.03 | 0.17 | 0.25 | 0.194 | 99.62 | 23 | 200°C-Dry Air | 400°C-Dry Air | 610°C-Ar under Reduced Pressure of 1 kPa | 0.936 | 221 |
| Example 4 | 0.02 | 0.21 | 0.10 | 0.100 | 99.78 | 37 | 200°C-Dry Air | 400°C-Dry Air | 620°C-Ar under Ordinary Pressure | 0.907 | 191 |
| Example 5 | 0.30 | 0.21 | 0.05 | 1.429 | 99.55 | 22 | 200°C-Dry Air | 400°C-Dry Air | 620°C-Ar under Reduced Pressure of 10 kPa | 0.935 | 211 |
| Example 6 | 0.45 | 0.23 | 0.03 | 1.957 | 99.42 | 29 | 200°C-Dry Air | 400°C-Dry Air | 630°C-Ar under Reduced Pressure of 10 kPa | 0.937 | 192 |
| Example 7 | 0.03 | 0.17 | 0.25 | 0.194 | 99.62 | 35 | 200°C-Dry Air | 400°C-Dry Air | 620°C-Vacuum of 0.01 Pa | 0.887 | 181 |
| Comparative Example 1 | 0.53 | 0.12 | 7.00 | 4.417 | 92.37 | 33 | 200°C-Dry Air | 400°C-Dry Air | 560°C-Ar under Reduced Pressure of 1 kPa | 0.934 | 155 |
| Comparative Example 2 | 0.02 | 0.30 | 0.15 | 0.067 | 99.73 | 34 | 200°C-Dry Air | 400°C-Dry Air | 620°C-Ar under Reduced Pressure of 1 kPa | 0.813 | 120 |

**[Table 2]**

| | Powder 1 | | | | Powder 2 | | | | Powder Mixing Ratio | Composition of Aluminum Powder Mixture | | | | |
|---|---|---|---|---|---|---|---|---|---|---|---|---|---|---|
| | Mg/% | O/% | Si/% | Al | Mg/% | O/% | Si/% | Al | | Mg/% | O/% | Si/% | Mg/O | Al |
| Example 8 | 0.001 | 0.14 | 0.03 | 99.86 | 0.36 | 0.18 | 9.5 | Bal. | 95:5 | 0.019 | 0.14 | 0.50 | 0.13 | 99.38 |
| Example 9 | 0.001 | 0.14 | 0.03 | 99.86 | 0.36 | 0.18 | 9.5 | Bal. | 90:10 | 0.037 | 0.14 | 0.98 | 0.26 | 98.89 |
| Example 10 | 0.001 | 0.14 | 0.03 | 99.86 | 0.53 | 0.12 | 7.0 | Bal. | 95:5 | 0.027 | 0.14 | 0.38 | 0.20 | 99.49 |
| Example 11 | 0.001 | 0.14 | 0.03 | 99.86 | 0.53 | 0.12 | 7.0 | Bal. | 90:10 | 0.054 | 0.14 | 0.73 | 0.39 | 99.12 |
| Example 12 | 0.001 | 0.14 | 0.03 | 99.86 | 0.53 | 0.12 | 7.0 | Bal. | 80:20 | 0.107 | 0.14 | 1.42 | 0.79 | 98.37 |
| Example 13 | 0.001 | 0.14 | 0.03 | 99.86 | 0.49 | 0.12 | 3.0 | Bal. | 90:10 | 0.050 | 0.14 | 0.33 | 0.36 | 99.52 |
| Example 14 | 0.001 | 0.14 | 0.03 | 99.86 | 0.49 | 0.12 | 3.0 | Bal. | 70:30 | 0.148 | 0.13 | 0.92 | 1.10 | 98.83 |
| Comparative Example 3 | 0.001 | 0.25 | 0.03 | 99.86 | 0.36 | 0.18 | 9.5 | Bal. | 95:5 | 0.019 | 0.25 | 0.50 | 0.08 | 99.38 |
| Comparative Example 4 | 0.001 | 0.14 | 0.03 | 99.86 | 0.8 | 0.22 | 3.0 | Bal. | 50:50 | 0.401 | 0.18 | 1.52 | 2.23 | 97.98 |

**[Table 3]**

| | D50 | Conditions for Resin Curing Step | Conditions for Degreasing Step | Conditions for Sintering Step | Relative Density of Sintered Body | Thermal Conductivity |
|---|---|---|---|---|---|---|
| | | | | | | W/mK |
| Example 8 | 21 | 200°C-Dry Air | 400°C-Dry Air | 620°C-Ar under Reduced Pressure of 1 kPa | 0.915 | 195 |
| Example 9 | 28 | 200°C-Dry Air | 400°C-Dry Air | 600°C-Ar under Reduced Pressure of 10 Pa | 0.966 | 200 |
| Example 10 | 23 | 200°C-Dry Air | 400°C-Dry Air | 610°C-Ar under Reduced Pressure of 1 kPa | 0.946 | 209 |
| Example 11 | 32 | 200°C-Dry Air | 400°C-Dry Air | 610°C-Ar under Ordinary Pressure | 0.938 | 202 |
| Example 12 | 27 | 200°C-Dry Air | 400°C-Dry Air | 600°C-Ar under Reduced Pressure of 10 kPa | 0.958 | 181 |
| Example 13 | 36 | 200°C-Dry Air | 400°C-Dry Air | 630°C-Ar under Reduced Pressure of 10 kPa | 0.954 | 220 |
| Example 14 | 28 | 200°C-Dry Air | 400°C-Dry Air | 610°C-Ar under Reduced Pressure of 1 kPa | 0.939 | 180 |
| Comparative Example 3 | 30 | 200°C-Dry Air | 400°C-Dry Air | 620°C-Ar under Reduced Pressure of 1 kPa | 0.831 | 125 |
| Comparative Example 4 | 27 | 200°C-Dry Air | 400°C-Dry Air | 560°C-Ar under Reduced Pressure of 1 kPa | 0.960 | 148 |

As shown in Table 1, Examples 1 to 7 are samples in which 0.02 to 0.45 mass% of Mg and 0.03 to 0.25 mass% of Si are contained in the aluminum and the value of Mg amount/oxygen amount is 0.1 or more and 2.0 or less.

Examples 1 to 7 had an excellent relative density of 0.88 to 0.95 and exhibited an excellent thermal conductivity of 181 to 225 W/K.

In contrast to Examples, in Comparative Example 1 containing 0.53 mass% of Mg, the thermal conductivity decreased since the Mg content was too large and the value of Mg amount/oxygen amount was too large.

In Comparative Example 2, since the value of Mg amount/oxygen amount was too small, the relative density of the sintered body was low and the thermal conductivity also decreased.

Each of Examples 8 to 14 shown in Table 2 is an aluminum powder product for additive manufacturing, consisting of a powder mixture obtained by mixing an aluminum powder (powder 1) having a purity of 99% or more and an aluminum alloy powder (powder 2) at a powder mixing ratio (shown as ratio of powder 1:powder 2, or proportion of powder 2 to powder 1) shown in Table 2.

As shown in Table 3, Examples 8 to 14 are samples in which in the aluminum powder mixture, 0.019 to 0.15 mass% of Mg is added, 0.33 to 1.42 mass% of Si is contained, and the value of Mg amount/oxygen amount is 0.13 or more and 1.10 or less.

Examples 8 to 14 had an excellent relative density of 0.915 to 0.966 and exhibited an excellent thermal conductivity of 180 to 220 W/K.

### INDUSTRIAL APPLICABILITY

With an aluminum powder product for metal additive manufacturing according to the aspect of the present invention, it is possible to manufacture an aluminum member having few internal defects and a high relative density by a binder jet method. As a result, it is possible to obtain a high density, high electrical conductivity, and high thermal conductivity for an aluminum sintered body to be obtained. Therefore, for example, it is possible to further improve the performance of heat exchange members, conductive members, and strength members prepared by using the binder jet method. Accordingly, the present invention is industrially usable.

### REFERENCE SIGNS LIST

1: Green body
2: Heating furnace
3: Aluminum powder mixture (aluminum powder product for metal additive manufacturing)
4: Pure aluminum powder
5: Aluminum alloy powder
6: Liquid phase
7: Sintered body
9: Sintered product (aluminum powder additive manufactured body)

## Claims

1. An aluminum powder product for metal additive manufacturing,
wherein a purity of aluminum in the entire powder is 98 mass% or more, 0.01 mass% or more and 0.5 mass% or less of Mg is contained, and a ratio Mg amount/oxygen amount of a contained amount of Mg (mass%) to a contained amount of oxygen (mass%) is 0.1 or more and 2.0 or less.

2. The aluminum powder product for metal additive manufacturing according to Claim 1, wherein 0.1 mass% or more and 1.0 mass% or less of Si is contained in addition to the Mg.

3. The aluminum powder product for metal additive manufacturing according to Claim 1 or 2, that is a mixture of
an aluminum powder having a purity of 99% or more, and
an aluminum alloy powder containing 0.1 mass% or more and 1.0 mass% or less of Mg and 3.0 mass% or more and 12.0 mass% or less of Si,
wherein a ratio Mg amount/oxygen amount of a contained amount of Mg (mass%) to a contained amount of oxygen (mass%) is 0.1 or more and 2.0 or less.

4. The aluminum powder product for metal additive manufacturing according to any one of Claims 1 to 3,
wherein the oxygen amount is 0.05 mass% or more and 0.3 mass% or less.

5. The aluminum powder product for metal additive manufacturing according to any one of Claims 1 to 4,
wherein a volume median diameter measured by a laser diffraction/scattering method is 10 µm or more and 100 µm or less.

6. A method for manufacturing an aluminum powder additive manufactured body, the method comprising:
repeating a step of stacking an aluminum powder and a step of applying an ink containing a binder for selectively fixing the stacked aluminum powder;
curing a resin in the binder by heating to form an aluminum powder green body;
degreasing the aluminum powder green body by heating to prepare an aluminum powder formed degreased body that is a sintering precursor; and
performing a step of sintering the aluminum powder formed degreased body by heating to obtain an aluminum additive manufactured body,
wherein as the aluminum powder, an aluminum powder product for metal additive manufacturing in which a purity of aluminum in the entire powder is 98 mass% or more, 0.01 mass% or more and 0.5 mass% or less of Mg is contained, and a ratio Mg amount/oxygen amount of a contained amount of Mg (mass%) to a contained amount of oxygen (mass%) is 0.1 or more and 2.0 or less is used, and
the degreasing step is performed at 500°C or lower.

7. The method for manufacturing an aluminum powder additive manufactured body according to Claim 6, wherein an aluminum powder containing 0.1 mass% or more and 1.0 mass% or less of Si in addition to the Mg is used.

8. A method for manufacturing an aluminum powder additive manufactured body, the method comprising:
repeating a step of stacking an aluminum powder and a step of applying an ink containing a binder for selectively fixing the stacked aluminum powder;
curing a resin by heating to form an aluminum powder green body;
degreasing the aluminum powder green body by heating to prepare an aluminum powder formed degreased body that is a sintering precursor; and
performing a step of sintering the aluminum powder formed degreased body by heating to obtain an aluminum additive manufactured body,
wherein as the aluminum powder, an aluminum powder product for metal additive manufacturing that is a mixture of an aluminum powder having a purity of 99% or more and an aluminum alloy powder containing 0.1 mass% or more and 1.0 mass% or less of Mg and 3.0 mass% or more and 12.0 mass% or less of Si, in which a ratio Mg amount/oxygen amount of a contained amount of Mg (mass%) to a contained amount of oxygen (mass%) is 0.1 or more and 2.0 or less, is used, and
the degreasing step is performed at 500°C or lower in any one of an oxidizing atmosphere, an inert atmosphere, or a reduced-pressure atmosphere of 1 Pa or more and 100 kPa or less.

9. The method for manufacturing an aluminum powder additive manufactured body according to any one of Claims 6 to 8,
wherein the step of performing sintering by heating is performed in any one of an inert atmosphere gas flow, a reducing gas flow, an inert gas flow in a reduced-pressure atmosphere of 1 Pa or more and 100 kPa or less, or a reducing gas flow at 1 Pa or more and 100 kPa or less.

10. The method for manufacturing an aluminum powder additive manufactured body according to any one of Claims 6 to 9, wherein the oxidizing atmosphere in the degreasing step is set to be dry air having a dew point of 10°C or lower.
